# EUROPEAN PATENT APPLICATION

(11) **EP 4 250 397 A1**
(43) Date of publication of application: **27.09.2023**
(21) Application number: 21895109.3
(22) Date of filing: 17.11.2021
(51) Int. Cl.: H01M 4/36, H01M 4/587, H01M 4/62, C01B 32/21, C01B 32/05, H01M 10/0525, H01M 4/02

(54) **NEGATIVE ELECTRODE ACTIVE MATERIAL FOR LITHIUM SECONDARY BATTERY, METHOD FOR PREPARING SAME, AND LITHIUM SECONDARY BATTERY COMPRISING NEGATIVE ELECTRODE MANUFACTURED USING SAME**

(30) Priority: 17.11.2020 KR 20200153656
(71) Applicant: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); Posco Future M Co., Ltd, Pohang-Si, Gyeongsangbuk-do 37918 (KR)
(72) Inventor: CHO, Moonkyu, Pohang-si, Gyeongsangbuk-do 37671 (KR); LEE, Gang Ho, Pohang-si, Gyeongsangbuk-do 37671 (KR); PARK, Sei Min, Pohang-si, Gyeongsangbuk-do 37655 (KR); AN, Jung-Chul, Pohang-si, Gyeongsangbuk-do 37673 (KR); YOU, Seung Jae, Pohang-si, Gyeongsangbuk-do 37655 (KR); WOO, Jung Gyu, Pohang-si, Gyeongsangbuk-do 37671 (KR); JO, Hyun-Chul, Pohang-si, Gyeongsangbuk-do 37834 (KR); YOON, Jong Hoon, Pohang-si, Gyeongsangbuk-do 37591 (KR)
(74) Representative: Potter Clarkson
(86) International application number: PCT/KR2021/016929
(87) International publication number: WO 2022/108341

(57) **Abstract**

The present disclosure relates to a manufacturing method of a negative active material for a battery, a negative active material manufactured therefrom, and a lithium secondary battery including the negative electrode, including:
the steps of coating a base material for a negative active material with a coating material; and heating the obtained coating product; wherein, the coating material is graphitizable carbon, the softening point is 50 °C or less, and the coating material is included so that the residual carbon amount is 1 to 5 parts by weight with respect to 100 parts by weight of the base material for the negative active material.

## Description

### CROSS-REFERENCE TO RELATED APPLICATION

This application claims priority to and the benefit of Korean Patent Application No. 10-2020-0153656 filed in the Korean Intellectual Property Office on November 17, 2020, the entire contents of which are incorporated herein by reference.

### BACKGROUND OF THE INVENTION

### (a) Field of the Invention

The present disclosure relates to negative active materials for lithium secondary batteries and their manufacturing methods. In addition, the present disclosure relates to a lithium secondary battery including a negative electrode manufactured therefrom.

### (b) Description of the Related Art

A lithium ion secondary battery (lithium ion secondary battery, LIB) is attracting much attention as a next-generation energy storage device while environmental issues are becoming an international issue. Lithium ion secondary batteries have excellent characteristics in terms of high operation voltage, energy density, and memory effect compared to typical secondary battery systems such as nickel cadmium batteries and nickel metal hydride batteries, so they are being widely applied to various application fields. As the demand for a high energy density lithium secondary battery increases, the use of silicon-based or silicon-oxide-based materials, which have an effective capacity 10 times higher than carbon-based materials as negative active materials, is increased.

A lithium ion secondary battery is composed of a positive electrode, a negative electrode, a separator and an electrolyte, and the performance of the battery is closely related to the characteristics of all constituent elements. Among them, hard carbon/soft carbon or graphite-based materials have been used as the negative active material constituting the negative electrode for nearly 30 years since 1991 when lithium ion secondary batteries were developed. The battery mainly uses graphite material, and various combinations of graphite compositions, and a various composition of graphite are applied depending on the battery maker (or cell company).

Currently, graphite material, which is most commonly used as a negative active material for lithium ion secondary batteries, has low operation voltage (working voltage), stable cycle-life characteristics, efficiency, merit in terms of price, and environmentally-friendly merit. However, there is a drawback that the theoretical capacity is limited to a maximum of 372 mAh/g. Due to the limitations of this theoretical capacity, it is difficult to secure the driving distance of an electric vehicle, and there is also a problem that is difficult to apply to various application fields. On the other hand, the recent secondary battery industry has a need for functionality through surface treatment on negative active materials in order to increase charging output and cycle-life characteristics.

### SUMMARY OF THE INVENTION

The present invention provides a negative active material for a lithium secondary battery with improved fast charging/discharge characteristics, a manufacturing method thereof, and a secondary battery including the same.

Specifically, the present invention intends to provide a negative active material for a lithium secondary battery with improved high-speed charging/discharge characteristics by coating a base material for the negative active material, a manufacturing method thereof, and a secondary battery including the same.

The present disclosure is related to a method of manufacturing of a negative active material for lithium secondary battery, comprising:
coating a base material for a negative active material with a coating material; and heating a product coated with the coating material;
wherein, the coating material is a graphitizable carbon, the softening point is 50 °C or less, and the coating material is included so that a residual carbon amount is 1 to 5 weight parts with respect to 100 weight parts of the base material for the negative active material.

The base material for the negative active material may be a base material obtained by graphitizing coke.

The coke can comprise 70 parts by weight or more of green coke with respect to 100 parts by weight of entire coke, and calcined coke as the balance.

The green coke may be coal-based green coke, petroleum-based green coke or a combination thereof.

The step of coating may be a dry coating in which no solvent is added.

The coating material can have a viscoelasticity with a viscosity of less than 3,000 cPs at room temperature.

The coating material may be at least one selected from the group consisting of coal-based coal tar, petroleum residue, phenolic resin and wood tar.

The petroleum residue can include one or more selected from the group consisting of pyrolyzed fuel oil (PFO), naphtha cracking bottom oil (NCB), ethylene cracker bottom oil (EBO), and vacuum residue (VR), De-asphalted oil (DAO), atmospheric residue (AR), fluid catalytic cracking decant oil (FCC-DO), residue fluid catalytic cracking decant oil (RFCC-DO), and heavy aromatic oils.

The coating material can have a residual carbon content of 10 to 40 weight parts per 100 weight parts of the coating material.

The present disclosure is related to a negative active material for lithium secondary battery, comprising:
a base material for negative active material; and a coating layer coating the base material,
wherein, the coating layer is a graphitizable carbon, with a softening point of 50 °C or less, and a coating material of the coating layer is included so that a residual carbon amount is 1 to 5 weight parts with respect to 100 weight parts of the base material for the negative active material.

The base material for the negative active material mat be graphitized coke.

The coke can contain 70 parts by weight or more of green coke with respect to 100 parts by weight of entire coke, and calcined coke is the balance.

The green coke may be coal-based green coke, petroleum-based green coke or a combination thereof.

The coating material may be a carbon type having a viscoelasticity with a viscosity of 3,000 cPs or less at room temperature.

The coating material can have a residual carbon content of 10 to 40 weight parts per 100 weight parts of the coating material.

The negative active material for the lithium secondary battery can have an Id/Ig of Raman spectrum measurement of 0.300 to 0.450, and the Id is the peak intensity measured at wavelength 1350cm⁻¹, Ig is the peak intensity measured at wavelength 1575cm⁻¹.

The present disclosure is related to a lithium secondary battery, comprising:
a positive electrode; a negative electrode; and an electrolyte;
wherein, the negative electrode includes a negative active material for a lithium secondary battery manufactured by the method according to above present disclosure.

According to the present invention, it is possible to provide a negative active material and its manufacturing method that also have fast charge and discharge characteristics without significantly inferior initial efficiency.

In addition, according to the present invention, it is possible to provide a negative active material in which cracks are prevented by coating the base material with a coating material having a controlled carbon retention rate.

### BRIEF DESCRIPTION OF THE DRAWINGS

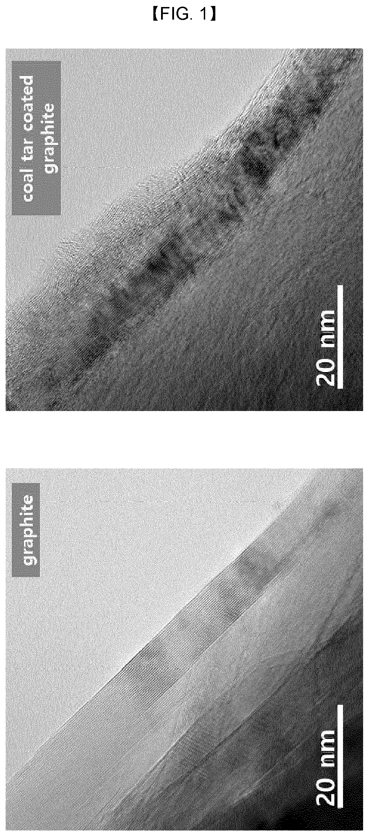

FIG. 1 shows TEM before and after coating of the surface of the negative electrode material of one embodiment of present disclosure.

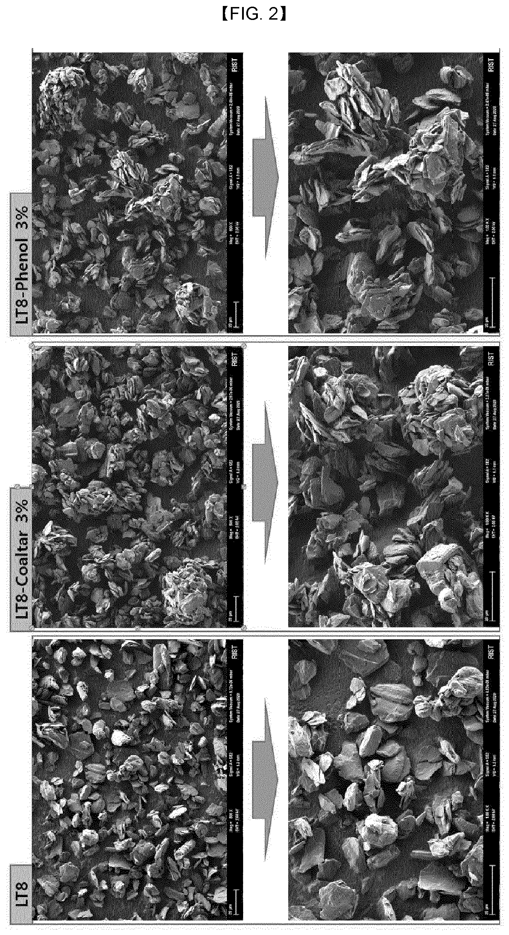

FIG. 2 is an SEM of the coated negative electrode material of one embodiment of present disclosure.

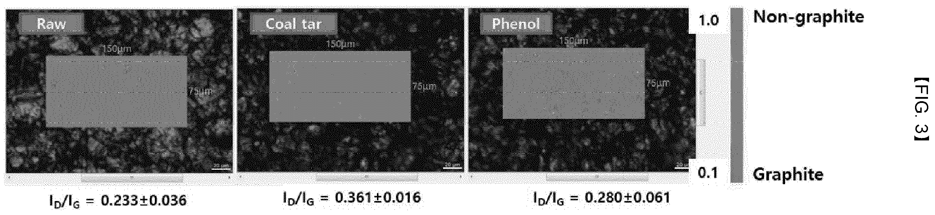

FIG. 3 shows the Raman spectrum measurement of one embodiment of the present disclosure.

### DETAILED DESCRIPTION OF THE EMBODIMENTS

Terms such as first, second and third are used to describe various parts, components, regions, layers and/or sections, but are not limited thereto. These terms are only used to distinguish one part, component, region, layer or section from another part, component, region, layer or section. Therefore, a first part, component, region, layer or section described below may be referred to as a second part, component, region, layer or section within the scope of the present invention.

The terminology used herein is only intended to refer to a specific exemplary embodiment and is not intended to limit the present invention. As used herein, the singular forms also include the plural forms unless the phrases clearly indicate the opposite. As used in the specification, the meaning of "comprising" specifies a particular characteristic, domain, integer, step, operation, element and/or component, and the presence/absence or addition of other characteristics, domains, integers, steps, actions, elements and/or components, are not excluded.

When a part is referred to as being "on" or "above" another part, it may be directly on top, or on the other part, or may be followed by another part in between. In contrast, when a part is said to be "directly on" another part, there is no intervening part between them.

In addition, unless otherwise noted, % means wt%, and 1 ppm is 0.0001 wt%.

Although not defined differently, all terms including technical terms and scientific terms used herein have the same meaning as commonly understood by a person of an ordinary skill in the technical field to which the present invention belongs. Terms defined in commonly used dictionaries are additionally interpreted as having meanings consistent with related technical literature and currently disclosed content, and are not interpreted in ideal or very formal meanings unless defined.

Hereinafter, an exemplary embodiment will be described in detail so that a person of an ordinary skill in the technical field to which the present invention belongs, can easily practice it. As those skilled in the art would realize, the described embodiments may be modified in various different ways, all without departing from the spirit or scope of the present invention.

Hereinafter, each step will be described in detail.

As the lithium secondary battery negative electrode material repeats expansion and contraction during use, cracks occur on its surface and the specific area increases, which can lead to poor battery characteristics. Accordingly, the present invention devised a method of coating the surface of the negative electrode material to prevent cracks caused by charging and discharging.

The present disclosure is related to a method of manufacturing of a negative active material for lithium secondary battery, comprising:
coating a base material for a negative active material with a coating material; and heating a product coated with the coating material.

The coating material is a graphitizable carbon, and the softening point is 50 °C or less. In addition, the coating material may have a viscosity of 3,000 cPs or less at room temperature, specifically, a viscosity of 1 to 3,000 cPs, and more specifically, a viscosity of 1 to 2,000 cPs. That is, the coating material of one embodiment of the present disclosure may have a viscoelasticity at room temperature. Specifically, the softening point of the coating material may be greater than 0 to 50 °C or less, greater than 0 to 41 °C or less, greater than 0 to 30 °C or less, or 20 to 30 °C or less.

The coating material may be at least one selected from the group consisting of coal-based coal tar, petroleum residue, phenolic resin and wood tar. The petroleum residue can include one or more selected from the group consisting of pyrolyzed fuel oil (PFO), naphtha cracking bottom oil (NCB), ethylene cracker bottom oil (EBO), and vacuum residue (VR), De-asphalted oil (DAO), atmospheric residue (AR), fluid catalytic cracking decant oil (FCC-DO), residue fluid catalytic cracking decant oil (RFCC-DO), and heavy aromatic oils.

Even if the coating material is included in the group consisting of coal-based coal tar, petroleum residue oil, phenolic resin and wood tar, the coating material should exhibit a viscoelasticity at room temperature with a softening point of 50°C or less.

This is also related to the coating method.

Methods for coating negative active materials include wet coating and dry coating. Wet coating is a method in which the base material for the negative active material to be coated is immersed in a solution containing the coating material and coated. Dry coating is a method of uniformly mixing and coating the base material and the coating material by a method such as a mixer (including a mixer with added shearing force) without adding a separate solvent. In the present disclosure, the coating material is coated through a dry coating method.

A coating material of present disclosure characterized by a viscoelasticity at room temperature has fluidity, which is a property of a liquid. Therefore, the coverage characteristic of coating the surface of the negative electrode material is good compared to general solid coating materials with little fluidity. That is, a coating material having a viscoelasticity at room temperature is uniformly attached to the surface of the negative electrode material and carbonized through heat treatment to form an amorphous carbon coating layer on the surface of the negative electrode material. For example, if the coating material is coal tar, the phase changes from coal tar to coal tar pitch, from coal tar pitch to soft carbon, and in the case of phenol to hard carbon.

Finally, an amorphous carbon coating layer is formed on the surface of the negative electrode material. The amorphous carbon coating layer formed on the surface of the negative electrode material avoids direct contact between the electrochemically active graphite edge surface and the electrolyte solution. In addition, it is possible to suppress the simultaneous insertion reaction of Li ion and solvent into the graphite layer, thereby reducing non-reversible reactions.

Using a viscoelasticity material at room temperature as a coating material is to take advantage of wet coating and dry coating at the same time. Formation of a uniform coating layer of wet coating is achieved through a viscoelasticity at room temperature, while cost efficiency and mass productivity can be achieved by using dry coating as a coating method.

In addition, the coating material may include a low molecular weight (weight average molecular weight (Mw) of 60 to 150) components that can be removed by the distillation process in an amount of 20 wt% or less.

One embodiment of present disclosure is defined through the amount of remaining carbon in relation to the content of the coating material. That is, the coating material of one embodiment of the present disclosure may be included so that the remaining carbon amount is 1 to 5 weight parts with respect to 100 weight parts of the base material for the negative active material. Specifically, the coating material may be included so that the remaining carbon amount is 2 to 4 weight parts based on 100 weight parts of the base material for the negative active material, and more specifically, the remaining carbon amount is 3 to 4 weight parts based on 100 weight parts of the base material for the negative active material.

If the amount of carbon remaining in the coating material exceeds the corresponding range, the carbon layer formed after carbonization may act as resistance to Li ion movement and adversely affect the charging characteristics. On the other hand, if the amount of remaining coal is too low, the amount of coating material is insufficient, and the surface of the base material that is not coated is revealed, so there is a drawback that the technical advantage is insignificant.

In addition, the coating material may be included in 2.5 weight parts to 50 weight parts with respect to 100 weight parts of the base material. Specifically, the coating material may be included in 5 weight part to 25 weight part, more specifically, 15 to 20 weight part with respect to 100 weight parts of the base material.

The coating material may have a residual carbon amount of 10 to 40 parts by weight with respect to 100 parts by weight of the coating material. Specifically, the coating material may have a residual carbon amount of 10 to 30 parts by weight with respect to 100 parts by weight of the coating material, and more specifically, the coating material may have a residual carbon amount of 15 to 25 parts by weight with respect to 100 parts by weight of the coating material.

The base material for the negative active material in one embodiment of present disclosure is graphitized coke. Hereinafter, coke that can be used as a base material will be looked at in detail.

The coke of one embodiment of present disclosure may include 70 parts by weight or more of green coke and calcined coke as the balance with respect to 100 parts by weight of entire coke. Specifically, the coke contains 80 parts by weight or more of green coke with respect to 100 parts by weight of entire coke, the balance of calcined coke, more specifically, the coke contains 90 parts by weight or more of green coke, the balance of calcined coke with respect to 100 parts by weight of entire coke, and more specifically, the coke may include 100 parts by weight of green coke with respect to 100 parts by weight of entire coke.

Compared to calcined coke, when green coke is graphitized, more ordering (La) and stacking (Lc) of the graphene layer in the graphite structure are possible, and accordingly, micro (~2nm), and meso (2-50 nm) pore can be reduced. Accordingly, as the green coke content increases, high-quality artificial graphite is formed after graphitization, and long-term charge and discharge characteristics can be improved.

In addition, the green coke may be coal-based green coke or petroleum-based green coke or a combination thereof.

In addition, the graphitized coke of present disclosure only needs to fall within the coke range, and the graphitization condition follows the general coke graphitization condition.

Through the step of heat treating the product coated with the coating material; finally, a negative active material for a lithium secondary battery is obtained. The coated product goes through a heat treatment step, and the coating material is carbonized.

The temperature range of the heat treatment step may be 1000 to 1400°C, specifically 1100 to 1300°C, and more specifically 1200 to 1300°C. The time range of the heat treatment step may be 1 hour to 4 hours, specifically 1 hour to 3 hours, preferably about 2 hours.

The present disclosure is related to a negative active material for lithium secondary battery, comprising:
a base material for negative active material; and a coating layer coating the base material, wherein, the coating layer is a graphitizable carbon, with a softening point of 50 °C or less, and a coating material of the coating layer is included so that a residual carbon amount is 1 to 5 weight parts with respect to 100 weight parts of the base material for the negative active material. The coating material and base material have been examined in detail in the description of the manufacturing method, and will be omitted below.

The base material for the negative active material mat be graphitized coke.

The coke can contain 70 parts by weight or more of green coke with respect to 100 parts by weight of entire coke, and calcined coke is the balance.

The green coke may be coal-based green coke, petroleum-based green coke or a combination thereof.

The coating material may be a carbon type having a viscoelasticity with a viscosity of 3,000 cPs or less at room temperature.

The coating material can have a residual carbon content of 10 to 40 weight parts per 100 weight parts of the coating material.

For the negative active material for the lithium secondary battery, the Id/Ig of the Raman spectrum measured value may be 0.300 to 0.450. Specifically, it may be 0.340 to 0.400, more specifically 0.350 to 0.390. Here, the Id is the peak intensity measured at wavelength 1350cm⁻¹, and Ig is the peak intensity measured at wavelength 1575cm⁻¹.

The present disclosure negative active material for a lithium secondary battery of one embodiment has a specific surface area of 0.9 to 2.7 m²/g, a capacity of 350 to 380 mAh/g, an initial efficiency of 90 to 93%, 3C rate (CC), - 0.1V cut off charging characteristic may be 160 to 250 mAh/g. Specifically, the specific surface area is 1.1 to 2.6 m²/g, the capacity is 350 to 355 mAh/g, the initial efficiency is 91 to 93%, 3C rate (CC), -0.1V cut off charging characteristics can be 160 to 200mAh/g.

A lithium secondary battery of one embodiment of present disclosure includes a positive electrode; negative electrode; and an electrolyte, and the negative electrode may be prepared by the disclosed method.

Hereinafter, an exemplary embodiment will be described in detail so that a person of an ordinary skill can easily practice it in the technical field to which the present invention belongs. However, the present invention may be embodied in many different forms, and is not limited to the exemplary embodiment described herein.

### Embodiment

Coke and coating material were prepared with the composition shown in the following table. Table 1 is the composition of coke, and Table 2 is the composition of the coating material.

The coal tar used in this Experimental Example has a residual carbon ratio of 20 parts by weight, a softening point of 25-30 °C, and 21.94 wt% of fixed carbon with respect to 100 parts by weight of coal tar. The phenolic resin has a residual carbon ratio of 40 parts by weight, a softening point of 37-50°C, and 40.05 wt% of fixed carbon based on 100 parts by weight of the phenol resin.

**(Table 1)**

| Division | Green Coke (by weight) | Calcined coke (by weight) |
|---|---|---|
| base material 1 | 70 | 30 |
| Base material 2 | 50 | 50 |
| Base material 3 | 100 | 0 |

**(Table 2)**

| Division | Coated weight part compared to base material | Residual carbon amount of coating material compared to base material |
|---|---|---|
| coal tar 1 | 5 | 1 |
| coal tar 2 | 15 | 3 |
| coal tar 3 | 20 | 4 |
| phenol 1 | 7.5 | 3 |
| phenol 2 | 10 | 4 |

As shown in the Tables 1 and 2, the base material and coating material were prepared. The base material was dry coated with a coating material. The combination is shown in Table 3 below.

The dry coating method was dry coating by mixing at 25 rpm for 5 minutes using a planetary mixer and then mixing at 100 rpm for 30 minutes. The negative active material was obtained by carbonizing the coating layer at 1250 ° C for 2 hours.

The particle size, specific area, tap density, initial capacity, initial efficiency and Id/Ig ratio and quick charge/discharge of the prepared negative active material were evaluated and shown in Table 3 below.

Each measurement method is as follows.
- Particle size: Laser diffraction method, span = (D90-D10)/D50
- Raman: Microscope magnification: × 20, range: 20 × 20 µ m, 532nm Laser, Power: 2.31mW, mode: XY 2D-mapping, exp. Time: 1sec, accumulation: 1 time, ND filter: After measurement with 172, the Id/Ig ratio was calculated. Herein, Id is the peak intensity of amorphous carbon in the wavelength region of 1350 cm⁻¹, and Ig is the peak intensity of crystalline carbon in the wavelength region of 1575 cm-1.
- specific surface area: BET method (Surface area and Porosity analyzer, Micromeritics, ASAP2020) was used to measure the specific surface area.
- Initial capacity: after 3 times evaluation at charging CC-CV 0.1C & 5mV (0.005C cutoff), and discharge 0.1C 1.5V cut-off, discharge capacity (mAh/g)
- Initial efficiency: after one measurement at charge CC-CV 0.1C & 5mV (0.005C cutoff), discharge 0.1C 1.5V cutoff, (discharge capacity/charge capacity) × 100
- Quick charging characteristic: after 3 times measurement at Charging CC-CV 0.1C, CC-CV 0.1C & 5mV (0.005C cutoff), discharge 0.1C 1.5V cut-off, measurement a time (sec) at the point of meeting -0.1V when charging 3C-rate CC.

**(Table 3)**

| Divisio n | Particle size(µm) | | | | | | d/lg Ratio | Specific surface area | Initial capacity | Initial efficiency | Quick charging characteristic | |
|---|---|---|---|---|---|---|---|---|---|---|---|---|
| | D1 | D10 | D50 | D90 | Span | | | (m²/g) | (mAh/g) | (%) | Time (sec) | Capa city (mAh/ 9) |
| Base materi al 1 having no coating | 3.87 | 8.11 | 15.05 | 28.63 | | 1.36 | 0.212 | 1.56 | 352.6 | 93.6 | 220 | 89.9 |
| Coal tar 2 coating on base materi al 1 | 6.87 | 12.14 | 21.07 | 35.85 | | 1.13 | 0.354 | 1.41 | 354.2 | 92.6 | 401 | 170.5 |
| Phenol 1 coating on base materi al 1 | 6.52 | 12.01 | 20.68 | 35.48 | 1.13 | 0.312 | 5.48 | 349.7 | | 92.3 | 384 | 162.7 |
| Base materi al 3 having no coating | 3.66 | 7.21 | 13.2 | 25.05 | 1.35 | 0.233 | 1.91 | 353 | | 94.8 | 339 | 146.2 |
| Coal tar 1 coating on base materi | 5.87 | 10.35 | 17.8 | 31.24 | 1.17 | 0.376 | 1.71 | 353.9 | | 93.1 | 362 | 160.8 |
| al 3 | | | | | | | | | | | | |
| Coatin g coal tar 2 on base materi al 3 | 7.21 | 12.14 | 20.62 | 35.25 | 1.12 | 0.383 | 1.83 | 353.2 | | 92.4 | 459 | 198.3 |
| Coatin g coal tar 3 on base materi al 3 | 7.65 | 13.2 | 22.04 | 35.72 | 1.02 | 0.362 | 2.56 | 352.1 | | 92.2 | 422 | 176.3 |
| Phenol 1 coating | 4.36 | 10.21 | 17.99 | 32.96 | 1.26 | 0.302 | 8.94 | 352.8 | | 92.1 | 349 | 149.2 |
| on base materi al 3 | | | | | | | | | | | | |
| Phenol 2 coating on base materi al 3 | 4.52 | 10.64 | 17.52 | 33.87 | 1.33 | 0.289 | 9.18 | 350.4 | | 91.8 | 327 | 132.2 |
| No coating on base materi al 2 | 4.37 | 9.05 | 16.01 | 28.41 | 1.21 | 0.227 | 1.65 | 352.9 | | 94 | 270 | 113.9 |
| Coatin | 9.52 | 14.18 | 23.05 | 36.81 | 0.98 | 0.364 | 1.11 | 354.3 | | 91.9 | 378 | 162.5 |
| g coal tar 2 on base materi al 2 | | | | | | | | | | | | |
| Phenol 1 coating on base materi al 2 | 9.51 | 14.03 | 22.88 | 36.87 | 1 | 0.297 | 6.92 | 349.6 | | 91.6 | 315 | 132 |

Compared to the negative active material of the uncoated coke base material, the initial capacity, specific surface area and charging characteristics of the coated carbons with graphitizable carbons (ie, coal tar) were excellent. The Raman Id/Ig ratio was large, confirming the amorphization of the surface.

On the other hand, in the case of coating with phenol resin, which is a non-graphitizable carbon, it can be seen that the quick charging characteristic is improved compared to the negative electrode material that is not coated according to the degree of control of the remaining carbon.

In addition, even if coated with coal tar, the initial capacity, initial efficiency, specific surface area, and charging characteristic vary according to the green coke ratio of the coke base material, but the Raman Id/Ig ratio shows that there is no significant change in surface amorphization depending on the coating material. Therefore, it was found that the charging characteristics were improved through appropriate adjustment of the content of green coke and coating material.

The present invention is not limited to the exemplary embodiment and can be manufactured in a variety of different forms. It can be understood that a person of an ordinary skill in the technical field to which the present invention belongs can be implemented in other specific forms without changing the technical idea or essential features of the present invention. Therefore, the exemplary embodiment described above should be understood as illustrative in all respects and not limiting.

## Claims

1. A method of manufacturing of a negative active material for lithium secondary battery, comprising:
coating a base material for a negative active material with a coating material; and
heating a product coated with the coating material;
wherein, the coating material is a graphitizable carbon, the softening point is 50 °C or less, and
the coating material is included so that a residual carbon amount is 1 to 5 weight parts with respect to 100 weight parts of the base material for the negative active material.

2. The method of claim 1, wherein:
the base material for the negative active material is a base material obtained by graphitizing coke.

3. The method of claim 2, wherein:
the coke comprises 70 parts by weight or more of green coke with respect to 100 parts by weight of entire coke, and calcined coke as the balance.

4. The method of claim 3, wherein:
the green coke is coal-based green coke, petroleum-based green coke or a combination thereof.

5. The method of claim 1, wherein:
the step of coating is a dry coating in which no solvent is added.

6. The method of claim 1, wherein:
the coating material has a viscoelasticity with a viscosity of less than 3,000 cPs at room temperature.

7. The method of claim 1, wherein:
the coating material is at least one selected from the group consisting of coal-based coal tar, petroleum residue, phenolic resin and wood tar.

8. The method of claim 7, wherein:
the petroleum residue includes one or more selected from the group consisting of pyrolyzed fuel oil (PFO), naphtha cracking bottom oil (NCB), ethylene cracker bottom oil (EBO), and vacuum residue (VR), De-asphalted oil (DAO), atmospheric residue (AR), fluid catalytic cracking decant oil (FCC-DO), residue fluid catalytic cracking decant oil (RFCC-DO), and heavy aromatic oils.

9. The method of claim 1, wherein:
the coating material has a residual carbon content of 10 to 40 weight parts per 100 weight parts of the coating material.

10. A negative active material for lithium secondary battery, comprising:
a base material for negative active material; and
a coating layer coating the base material,
wherein, the coating layer is a graphitizable carbon, with a softening point of 50 °C or less, and
a coating material of the coating layer is included so that a residual carbon amount is 1 to 5 weight parts with respect to 100 weight parts of the base material for the negative active material.

11. The negative active material of claim 10, wherein:
the base material for the negative active material is graphitized coke.

12. The negative active material of claim 11, wherein:
the coke contains 70 parts by weight or more of green coke with respect to 100 parts by weight of entire coke, and calcined coke is the balance.

13. The negative active material of claim 12, wherein:
the green coke is coal-based green coke, petroleum-based green coke or a combination thereof.

14. The negative active material of claim 10, wherein:
the coating material is a carbon type having a viscoelasticity with a viscosity of 3,000 cPs or less at room temperature.

15. The negative active material of claim 10, wherein:
the coating material has a residual carbon content of 10 to 40 weight parts per 100 weight parts of the coating material.

16. The negative active material of claim 10, wherein:
the negative active material for the lithium secondary battery has an Id/Ig of Raman spectrum measurement of 0.300 to 0.450, and
the Id is the peak intensity measured at wavelength 1350cm⁻¹, Ig is the peak intensity measured at wavelength 1575cm⁻¹.

17. A lithium secondary battery, comprising:
a positive electrode;
a negative electrode; and
an electrolyte;
wherein, the negative electrode includes a negative active material for a lithium secondary battery manufactured by the method according to any one of claims 1 to 9.
